# EUROPEAN PATENT APPLICATION

(11) **EP 4 831 527 A1**
(43) Date of publication of application: **28.10.2026**
(21) Application number: 25172341.7
(22) Date of filing: 24.04.2025
(51) Int. Cl.: F16L 33/30, F16L 55/11, F16L 37/091

(54) **CONNECTING ELEMENT FOR A PIPE SECTION MADE OF SHAPE MEMORY POLYMER, PIPE CONDUIT CONNECTION COMPRISING SAID CONNECTING ELEMENT AND METHOD FOR CONNECTING A PIPE SECTION TO SAID CONNECTING ELEMENT**

(71) Applicant: Uponor Innovation AB, 737 61 Virsbo (SE)
(72) Inventor: Cota, Timothy, Lakeville, 55044 (US)
(74) Representative: Li Schrag, Yue

(57) **Abstract**

To further develop a connecting element (100; 102) for a pipe section (10) made of shape memory polymer and comprising
- a cylindrical male connector (3) designed to fit inside the pipe, wherein the cylindrical male connector (3) comprises a circumferential mechanical retaining flange (4) extending outward beyond the male connector's circumference to secure the connecting element (100; 102) to the pipe section (10), and
- a circumferential, resilient sealing element (8) extending outward and being designed to create a fluid-tight seal between the pipe section (10) and the cylindrical male connector (3),
in such way, that the pipe closing process or the pipe connection process is streamlined, it is proposed that
- the circumferential mechanical retaining flange (4) comprises at least two separate segments (6) spaced apart by a gap (7), which segments (6) are arranged circumferentially around the cylindrical male connector (3) and extend radially outward from the central axis (CA) and
- the sealing element (8) and the retaining flange (4) are spatially separated from each other to function independently in the operating condition.

## Description

### Technical Field

The patent outlines a connecting element as described in the preamble of claim 1. The present invention further belongs to a pipe conduit connection according to the preamble of claim 12.

### Background and prior art

Connecting elements are crucial components in piping systems, entrusted with securing and sealing pipe sections effectively to maintain fluid integrity and mechanical stability. In scenarios where pipes are made from materials such as shape memory polymers, the design of connecting elements becomes pivotal. Shape memory polymers have the unique ability to return to their original shapes after deformation, which makes them particularly suitable for applications requiring adaptability and resilience-like flexible piping systems.

These connecting elements attach via mechanical means and provide fluid-tight seals through circumferential retaining flanges and sealing elements. These components are essential for restricting fluid leaks and ensuring structural connectivity under various operational conditions. The flange provides the retention force needed to keep the pipes affixed securely while the sealing element ensures no fluid escape between connected pipe sections.

EP 4 060 212 A1 describes a pipe connection method where the pipe end is mechanically expanded to fit over a connecting piece featuring radially projecting flanges and circumferential grooves. A sealing ring with multiple annular ridges is placed within the groove to ensure a secure and tight seal. After fitting, the pipe end shrinks back around the connecting piece, creating a firm mechanical and sealed connection. This connection method offers variants involving a clamping ring for reinforcing the pipe connection. The patent details procedures for manual, automated, or overmolding assembly of the sealing ring into the circumferential groove.

The current state of the art in pipe connection methods involves the use of additional components, such as the PEX reinforcing ring, which significantly increases the complexity of the installation process. The requirement to include a PEX ring complicates the connection, increasing the number of steps necessary and the time required for installation by approximately 33%. This complexity is further exacerbated by the need to source, stock, and maintain these additional parts, leading to logistical challenges on-site. Moreover, the difficulties in insulating around the reinforcing rings are notable, particularly in larger diameter connections, where the slow expansion speeds hinder efficient installation. The ring stops employed in the current methods do not reliably prevent slips, resulting in improper placement of the ring, and thereby compromising the integrity of the connection. These issues contribute to an increased risk of installer errors, especially in small confined spaces where precise installation is challenging. Cold weather conditions present additional hurdles, complicating the expansion process, leading to installation difficulties and increasing the likelihood of delays in pressure testing.

### Presentation of the invention: Objective, solution, advantages

The invention aims to streamline the pipe closing or the pipe connection process by eliminating the need for additional components such as the PEX reinforcing ring, thereby simplifying the installation process and reducing the number of parts required, ensuring consistent and reliable connection performance across varying temperature conditions.

This problem is solved by a connecting element according to claim 1, a pipe conduit connection according to claim 12 as well as a method for connecting a pipe section according to claim 14. Advantageous embodiments are described in the respective dependent claims.

The patent application introduces a connecting element for joining a pipe section made of shape memory polymer, either plugging it or linking it to another pipe. It features a cylindrical male connector with a circumferential mechanical retaining flange extending outward, offering a retaining force for stability and tension. Additionally, it has a circumferential sealing element that creates a fluid-tight seal by compressing between the pipe's inner surface and the connector's outer surface.

The flange extends radially outward from a central axis of the male connector, potentially projecting beyond the outermost circumference of the connector itself. The outermost circumference of the cylindrical male connector is the widest outer perimeter of a cylindrical section of a fitting body of the connecting element. Functionally, the flange is designed to provide a retaining force that maintains tension and contributes to holding the pipe section firmly in place without risk of dislocation during use.

This design separates the functions of the mechanical flange and sealing element, allowing each to operate independently-notably the flange for mechanical stability and the seal for fluid integrity.

The invention is based on the idea, that the retaining flange comprises segments, such as teeth, around the connector, enhancing grip without affecting the sealing capabilities.

Thus, a distinctive feature of this patent application is the structural arrangement of the circumferential mechanical retaining flange, composed of separate segments, such as teeth, for example incisor-like teeth or shark-like-teeth or claw-like-teeth, spaced apart by gaps. These segments are strategically arranged circumferentially around the cylindrical male connector, all extending radially outward from the central axis. This segmented design aims to enhance flexibility and adaptability during installation, providing the connector with the opportunity to adjust more readily to various pipe diameters while maintaining radial tension.

The mechanical retaining flange can be designed as a multi-segmented metal retaining ring with specially designed teeth. By segmenting the retaining flange into separate teeth, the design aims to maximize the application of squeeze force on a reduced surface area. This contributes to increased grip strength and works to counter axial ejection. Axial ejection refers to the unintended dislocation or slipping of the connector under pressure or during use, which could compromise the fluid-tight seal and mechanical stability of the system. The segmented teeth of the metal retaining ring are purposefully configured to counteract this risk, aiming to ensure secure and reliable retention under varying operating conditions.

By minimizing the surface area upon which force is applied, the design focuses on ensuring that the grip is concentrated and potent, offering resistance to axial forces that could otherwise compromise the integrity of the connection. This methodical approach facilitates a robust attachment and supports the adaptability of the connecting element to different pipe diameters and installation environments, without detracting from the mechanical or sealing performance.

The segmented metal retaining ring with teeth works to create a formidable mechanical grip, enhancing the overall reliability and durability of the connection system, addressing challenges associated with pipe section closure and attachment in fluid systems.

The setup is advantageous for applications needing dependable pipe connections, easing installation and maintenance while enduring varied pressures and temperatures. By independently operating mechanical and sealing components, the design reduces risks of degradation or failure-delivering long-term reliability.

The pipe conduit connection component presents innovation by reducing the traditional clamping ring, which is typically used in the prior art for securing the pipe section against the connecting element.

Reducing reliance on a clamping ring simplifies and streamlines the assembly process. The shape memory polymer's capacity, the specific geometry of the segmented retaining flange, being designed to grip into the pipe, and the specific geometry of the sealing element allow this simplification. This simplification leads to faster assembly and reduced material costs, offering economic and operational benefits.

Moreover, the absence of a clamping ring leverages the polymer's natural ability to provide a secure seal once it resumes its predetermined shape. When the polymer contracts post-insertion, the retaining forces generated by the shape memory properties offer a means for establishing a stable engagement between the pipe and the connector, which can minimize the likelihood of slippage or misalignment and may bolster long-term durability under operational stress.

Additionally, the present invention improves maintenance considerations. Excluding the clamping ring eliminates a potential wear component from the structure, potentially reducing points of mechanical failure or fatigue over time, resulting in a more robust system able to withstand environmental fluctuations, vibrations, and pressure variations, without the need for extra physical constraints.

Adopting this design represents a shift towards utilizing material features to solve challenges in industrial piping. It suggests a trend toward efficient, simplified designs based on material science, providing reliable solutions for fluid transport with adaptable connections.

The ringless fitting design highlights a significant reduction in connection time, approximating a 33% decrease, offering substantial labor savings. By removing the labor-intensive clamping ring installation, the exemplary embodiment utilizes shape memory polymer properties for seamless, rapid engagement with connectors. This faster process optimizes labor resources, improving productivity and lowering costs.

An exemplary embodiment delves into these features, highlighting a multi-segmented retaining ring as the main mechanical component. This ring distributes mechanical forces optimally, adapting to different pipe materials and geometries.

The embodiment also emphasizes the sealing elastomer's role, engineered to withstand compressive forces, preventing leaks, and maintaining pressure.

The separation of retention and sealing functions optimizes each independently, addressing distinct mechanical and hydraulic demands. While traditional designs face wear-induced failures, this approach mitigates such issues by isolating these processes structurally. Overall, this connecting element exemplifies modern engineering by merging the multi-segmented flange's efficacy with the sealing elastomer's resilience, significantly improving reliability and versatility. It sets a benchmark in precision-engineered pipe connections, tailored for challenging environments with minimal maintenance needs, highlighting its innovative prowess.

The connecting element enables a sophisticated arrangement of circumferential mechanical retaining flange segments. For instance, the design may include three to thirty segments, possibly configured as five to twenty, or optionally eleven or twelve segments. This arrangement can be symmetrical or largely symmetrical around the cylindrical male connector. Such a configuration can assist in distributing the load and forces exerted during operation evenly across the circumference of the connector, potentially enhancing its stability and reliability in securing the pipe section.

The symmetrical distribution of these segments allows each to play a role in the mechanical retention process. By arranging multiple segments in this manner, the connecting element is capable of adapting smoothly to varying mechanical demands and operational pressures. This structural strategy heightens the capacity to resist deformation and maintain connection integrity under various environmental conditions, such as thermal variations affecting shape memory polymer pipe sections.

Overall, the innovative symmetrical arrangement of circumferential flange segments not only facilitates a sophisticated mechanical retention approach but also highlights the adaptability and reliability instilled in the connecting element's design. The embodiment demonstrates this feature as a promising aspect of piping solutions, potentially supporting enhanced durability and efficiency in fluid transport applications.

The design of the connecting element introduces distinct structural geometries for the separate segments of the circumferential mechanical retaining flange. These segments can be suitable for trapezoidal, square, or rectangular profiles in longitudinal section. An advantageous aspect is the flat outer retaining edge, which is thoughtfully crafted to improve gripping and retaining actions by engaging or interacting with the inner surface of the pipe section.

The retaining flange is designed to deform the inner wall of the pipe to engage with the pipe and hold the inner wall of the pipe onto the outer surface of the retaining flange, thus providing a mechanical grip. The deformation of the inner wall of the pipe allows to maximize the contact area between the retaining flange and the pipe.

The retaining edge or digging edge can be provided at the front of the retaining flange designed to cut or to penetrate the surface of the inner wall of the pipe. Penetration into the tube wall increases the ability of the teeth to resist the axial fitting ejection force.

The ability to engage with, dig into or penetrate into, the tube wall is specifically enhanced if the retaining flange is made of metal and thus substantially harder than the soft shape memory polymere tube.

The corpus of the segments, is advantageously wider in longitudinal section than they are tall. This design configuration focuses on optimizing gripping power and stability. By having a broader base relative to its height, each segment can distribute the mechanical forces over a larger surface area, aiming to increase resistance against movement or shifting and enhance the overall durability and dependability of the connection.

These segments, wider than tall in longitudinal view, offer multiple benefits. The increased width allows broader contact with the pipe interior, optimizing force distribution for better retention and reducing stress points. This aids in preventing damage to the connector and pipe, especially in dynamic or high-pressure situations.

The flat outer edge of the retaining flange aids attachment by resisting slippage during use, supporting stability and reliability amid vibrations or thermal expansions typical with shape memory polymers. This interaction maintains retention, reducing connection failures and preventing inefficiencies or leaks.

These geometrical features enhance the connecting element's versatility and functionality across industrial uses. Fluid transport or signaling systems benefit from the engineered segment geometries ensuring secure, prolonged connections, supporting system fluidity and integrity.

The connecting element includes a proficient sealing mechanism by designing the sealing element to protrude beyond the outermost circumference of the cylindrical male connector. This protrusion is arranged to potentially enhance the sealing pressure exertable at the pipe connection when the connecting element is in its operating condition. Such a design is advantageous in forming a robust fluid-tight seal, which can be suitable for managing pressures and minimizing leakage at the points of connection.

Made from durable elastomer, the sealing element withstands compressive forces for a perfect seal, even against irregular pipe surfaces. This design simplifies installation and maintenance, reducing reliance on extra sealing aids and streamlining assembly in industrial environments.

Overall, the design prioritizes sealing strength to ensure reliable connections, reflecting a focus on real-world fluid system challenges, offering robust and innovative solutions for pipe connections.

The enhanced design of the connecting element optionally includes an inclined arrangement of the longitudinal axis of the retaining flange segments. This inclination is connectable toward the pipe section end in the operating condition, potentially contributing to improved retaining force at the pipe connection. Specifically, the longitudinal axis of the retaining flange can be arranged at an angle of less than 45 degrees to the longitudinal axis of the cylindrical male connector, with inclinations between 10 degrees and 44.5 degrees, such as angles between 30 degrees and 43 degrees, being favorable.

Angling the retaining flange segments helps them engage with the pipe section's inner surface effectively, offering directional securing forces alongside their circumferential grip. This inclination aids in counteracting movements that might affect pipe stability.

The angular design resists detachment or slippage and adapts to thermal changes, making it beneficial for applications involving shape memory polymers and varying pressures. The configuration offers mechanical retention, ensuring fluid system continuity.

The design of the connecting element can include segments of the retaining flange that extend radially outward in a claw-like curved manner. This distinctive curvature aims to facilitate gripping and retaining actions on the pipe section, supporting mechanical engagement and promoting retention. The claw-like design bears similarity to biological grasping mechanisms found in natural systems, where optimizing grip strength and stability can be considered quite valuable.

The curvature advances secure connection technologies, improving performance of fluid transport and piping systems in diverse applications.

Thus, according to a preferred embodiment, the steel retaining flange outer perimeter contact surface edge is toothed and angled away from the sealing elastomer component. With other words, the teeth are angled backward against the axial ejection force, to further strengthen the tooth's ability to resist axial movement.

The connecting element can incorporate a cylindrical male connector that includes an undulating surface structure. This structure may feature at least two undulating ridges, each suitable for particular roles. One ridge might comprise a groove designed to receive the sealing element, while another ridge is suitable for accommodating the retaining flange. This dual-functional design of ridges encourages simultaneous mechanical and sealing functions, contributing to the improved functionality and efficiency of the connector.

In an alternative embodiment the structure may feature only one undulating ridge for the sealing element, whereas the retaining flange is directly attached, for example directly molded to the male connector.

The undulating ridges facilitate engagement with sealing and retaining elements. The groove-hosting ridge helps position the sealing element to maintain tight seals across varying pressures and prevent fluid leakage, even under operational stress. The optional second ridge supports a firm attachment with the retaining flange, distributing mechanical forces for improved connector stability and reliability against environmental stresses.

The connecting element may include a circumferential depression or trough on the cylindrical male connector, positioned between the sealing element and the retaining flange. This trough is intended to support the separate functionality of both the sealing element and the retaining flange during operating conditions. Its presence can provide structural separation, helping the two elements to perform their individual tasks with minimal interference, potentially enhancing the effectiveness and reliability of the connecting element's design.

The depression acts as a buffer zone, enhancing mechanical and sealing performance by reducing cross-interaction between the elements. It allows the sealing element to focus on creating a fluid-tight seal while the retaining flange handles mechanical securing.

The connecting element utilizes a spatial separation strategy enabled by the cylindrical ring-shaped area within the cylindrical male connector. This strategic placement can be beneficial as it separates the sealing element and the retaining flange, allowing each component to operate with a degree of independence and effectiveness within the operational setting.

This patent describes according to a preferred embodiment a connecting element using insert-molding, where the retaining flange is attached to the cylindrical male connector. Insert-molding involves placing components into a mold and injecting molten plastic to create a solid part. This method enhances the bond between the flange and connector, providing a stable structure.

Through insert molding, the design aims for a seamless, durable connection improving stability and integrity, reducing weaknesses of welding or adhesives. It offers resistance to forces and stresses in fluid systems, ensuring reliability in retaining and sealing pipe sections.

Insert molding also boosts production efficiency, streamlining assembly and achieving dimensional accuracy. It underscores the focus on robust performance via advanced manufacturing technologies, increasing the connecting element's durability.

In summary, insert molding enhances the connecting element's reliability, aiming for optimal functionality, durability, and efficiency in fluid systems applications, supporting both manufacturing and operational performance improvements.

The connecting element presents a thoughtful selection of material compositions for its components, notably the cylindrical male connector, retaining flange, and sealing element, reflecting distinct material roles. The retaining flange may appropriately be fabricated from metals and/or other robust, non-resilient materials, such as stainless steel, copper, silver, nickel, gold, tin, Inconel, or a Polytetrafluoroethylene (PTFE) coating. These materials are suitable for their strength, durability, and resistance to environmental stressors, assisting the flange in providing dependable mechanical retention over extended operational periods.

Conversely, the sealing element includes a composition that may encompass elastomers, like Nitrile, Fluoroelastomer, Silicone, or Ethylene Propylene Diene Monomer. This choice reflects a focus on flexibility and resilience, advantageous qualities for maintaining a fluid-tight seal under varying pressure and temperature conditions. Elastomers like these can withstand deformation while retaining their sealing properties, which aids in ensuring consistent performance in fluid system applications.

The patent application presents a pipe conduit connection component that includes a connecting element as described above and at least one section of a pipe or tube made of shape memory polymer. Said pipe section being configured to receive the connecting element by being elastically expandable at room temperature and capable of returning to a predetermined original shape after being deformed. The outer diameter of the cylindrical male connector being substantially the same as the inner diameter of the pipe section in the original shape. The cylindrical male connector being arranged at one end of the pipe section inside the pipe, wherein the retaining flange of the cylindrical male connector grasps, in particular digs into or engages into, the wall of this pipe section end to firmly secure the cylindrical male connector.

The patent application introduces a method for connecting a pipe section made from shape memory polymer to a connecting element as described above. This methodology offers various advantages. The process is viable for reducing installation time by utilizing the material properties of shape memory polymer instead of additional securing apparatus like clamping rings. The memory polymer's expansive and contractive abilities allow the connection to adapt dynamically to environmental conditions. This blend of material science and mechanical design grants flexibility and longevity in applications subject to diverse operational variables such as temperature, pressure, and movement.

Moreover, by enabling the flange segments to securely grasp the inner wall, the method fosters stabilization and retention without requiring external securing forces or devices, thus potentially minimizing wear and simplifying maintenance considerations over time.

Once the connector is in place, the natural contraction initiated by the shape memory polymer facilitates a return to its original configuration. During contraction, the tube envelops the connector while the circumferential mechanical retaining flange, positioned around the connector, is able to embed itself into this polymer wall. This mechanical interaction proves useful in providing a secure connection without the need for additional restraints such as clamping rings or adhesives.

The present invention finally refers to the use of the connecting element as described above and/or of the pipe conduit connection as described above for providing at least one cold expansion plumbing and hydronic fitting connection in a hydronic heating and cooling system.

The patent application introduces connecting elements, such as plugs, or couplers, as T-fittings or elbow fittings, and pipe conduit connections for plumbing in hydronic heating and cooling systems via cold expansion. It utilizes shape memory polymers for efficient plumbing in complex networks.

### Brief explanation of the drawings

As already discussed above, there are several options to embody as well as to improve the teaching of the present invention in an advantageous manner. To this aim, reference is made to the claims respectively dependent on claim 1 or on claim 12; further improvements, features and advantages of the present invention are explained below in more detail with reference to two preferred embodiments by way of example and to the accompanying drawings where
Fig. 1 shows a method for securely connecting a shape memory polymer pipe section to a connecting element according to the present invention, illustrating the expansion, insertion, and securing process;
Fig. 2 shows an exploded view of a first embodiment of the connecting element according to the present invention; said embodiment being designed for closing a pipe section according to the method of the present invention;
Fig. 3 shows a side view of the connecting element 4 of figure 2.
Fig. 4 shows a longitudinal-sectional of the connecting element depicted in figure 2.
Fig. 5 shows a longitudinal-sectional of a second embodiment of the connecting element according to the present invention, namely of a T-shaped connection element being designed for connecting pipe sections according to the method of the present invention; and
Fig. 6 shows in longitudinal-section an embodiment of the pipe conduit connection according to the present invention, comprising the connecting element depicted in figure 2.

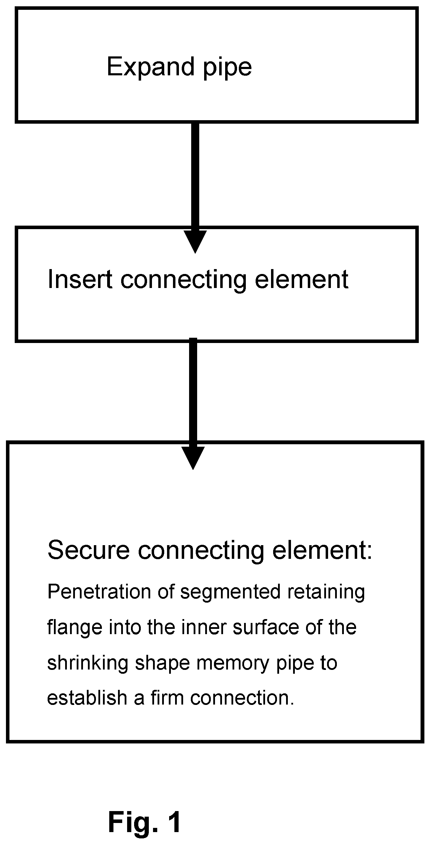

The same reference numerals are used for corresponding parts in Fig. 1 to Fig. 6.

### Exemplary ways of embodying the present invention

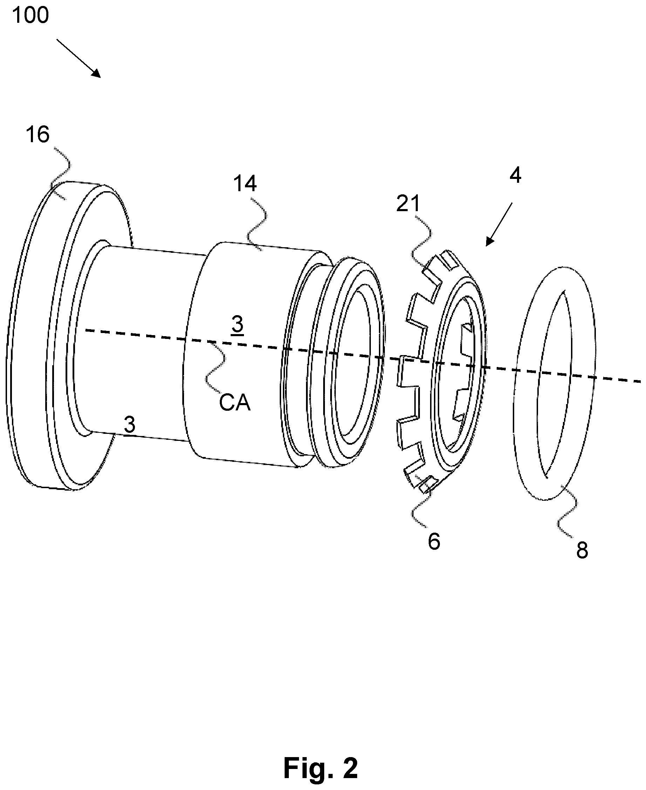

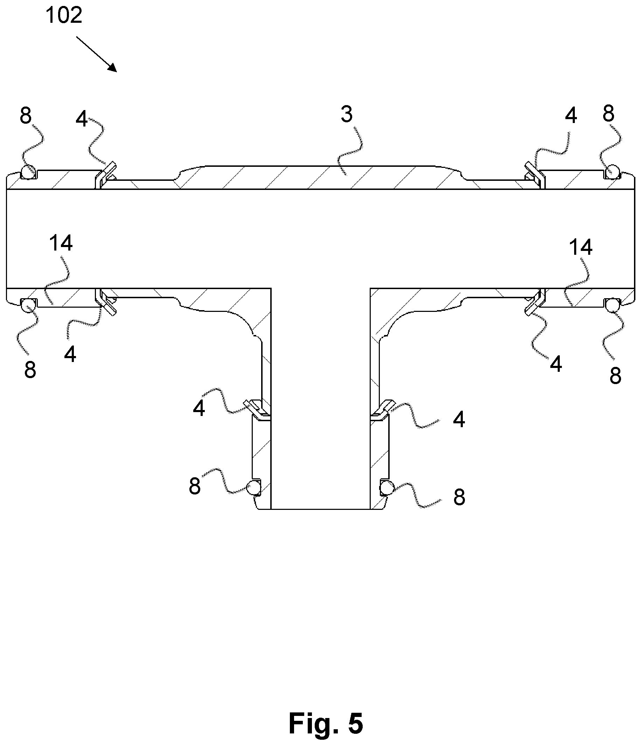

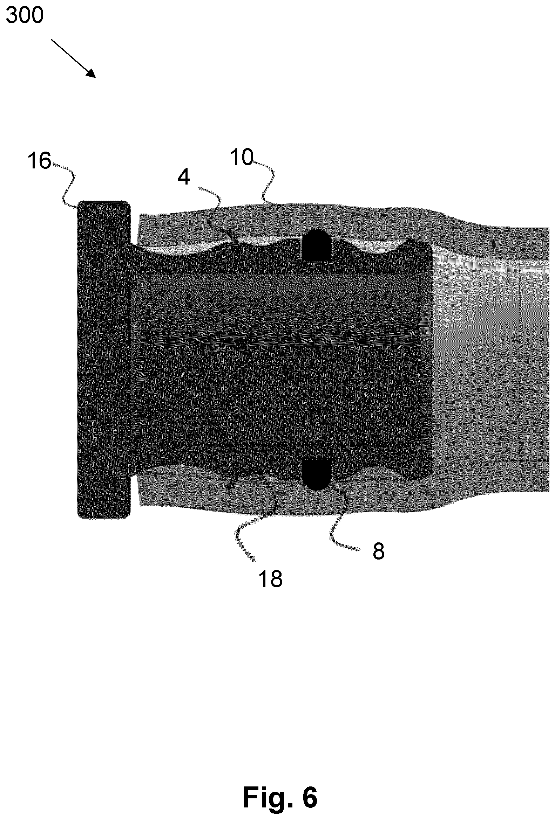

In order to avoid unnecessary repetitions, the following description regarding the embodiments, characteristics and advantages of the present invention relates (unless stated otherwise)
- to the first embodiment of the connecting element 100 according to the present invention (cf. Figs. 2 to 4) as well as
- to the second embodiment of the connecting element 102 according to the present invention (cf. Fig. 5) as well as to
- the embodiment of the pipe conduit connection 300 according to the present invention (Fig. 6).

All embodiments 100, 102, 300 being designed to work according to the method of the present invention.

Figure 1 depicts a method for securely connecting a pipe section 10 made of shape memory polymer to a connecting element 100, 102 emphasizing the sequential process involved in the method. Initially, the pipe section 10 is expanded, as indicated by the uppermost segment labeled "Expand Pipe." This expansion allows for subsequent installation activities.

The process progresses as the connecting element 100, 102 is positioned at one end of the pipe section 10, arranged inside the expanded pipe. This stage is represented in the middle section labeled "Insert connecting element," demonstrating the placement of the connector 100, 102 within the pipe.

Once the connector 100, 102 is situated correctly, the pipe section 10 returns to its predetermined original shape. In the final step, outlined by the bottom segment labeled "secure connecting element," the segments 6 of the circumferential mechanical retaining flange 4 engage firmly with the inner wall at the pipe section's 10 end. In more detail, segment 6 of a retaining flange 4 of the connector 100, 102 penetrate into the inner surface of the shrinking shape memory pipe to establish a firm connection, ensuring a secure grip and hold (cf. figure 6).

This flange interaction, which may involve digging or other engagement methods, ensures that the connector 100, 102 is firmly secured within the pipe section 10.

Fig. 2 shows an exploded view of a connecting element 100 comprising the cylindrical male connector 3, a sealing element 8, and the mechanical retaining flange 4 assembly. The cylindrical male connector 3 depicted in the central portion of the figure includes a cylindrical structure with a smooth outer surface. Adjacent to this cylindrical structure, the sealing element 8 is illustrated as an elastomeric ring positioned along the central axis CA to provide a fluid-tight seal when compressed between the pipe section 10 and the cylindrical male connector 3.

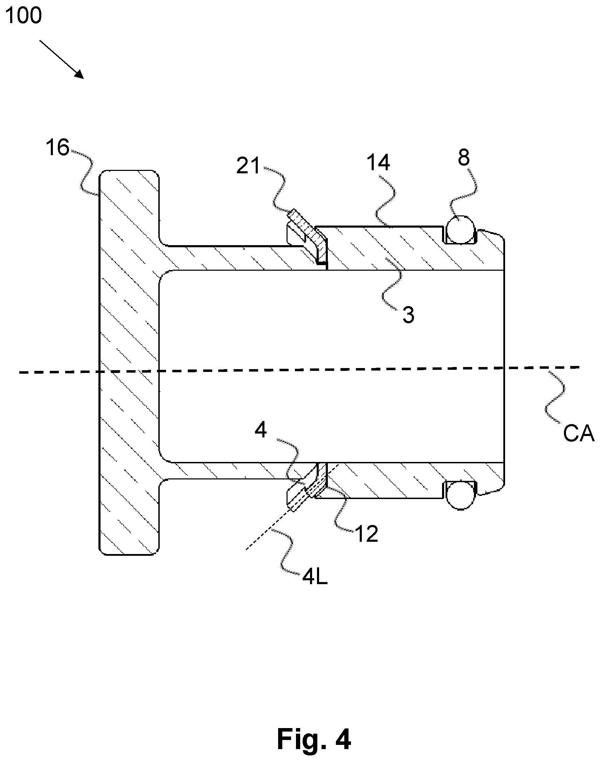

The mechanical retaining flange 4 assembly is characterized by multiple segments 6 which extend radially outward. These segments 6 function to securely grasp the inner surface of the pipe section 10, thereby providing mechanical retention (cf. figure 6). Each segment 6 includes teeth-like protrusions, designed to enhance the gripping capability and resist axial forces that may otherwise lead to dislodgement of the connector 100. The teeth-like protrusions may have sharp distal edges 21 (cf. figures 1 to 6) that enable them to penetrate the inner wall of the pipe and thus create a force-fit connection. The sharp distal edges 21 may be flat or pointed (not shown), forming shark-teeth-like protrusions. Moreover, the distal edges (21) may be bent towards the fitting body 3, thus forming claws (cf. figures 4 and 6). This curvature and sharpness make it easier to penetrate the pipe's inner wall, ensuring a secure grip and hold.

The configuration of the retaining flange 4 assembly indicates that the segments 6 are spatially distributed around the cylindrical male connector 3 and separated by gaps 7, enabling them to operate independently. Furthermore, the sealing element 8 is highlighted as a separate component from the retaining flange 4 assembly.

Finally, Fig. 2 illustrates each component as distinct pre-assembled parts, allowing for easy identification and assembly. The spatial arrangement of these elements suggests a flexible approach in constructing a pipe conduit connection using the connecting element 100 without the requirement for additional external components, such as reinforcing rings, thus integrating the functions of sealing 8 and retention 4 directly within the fitting design.

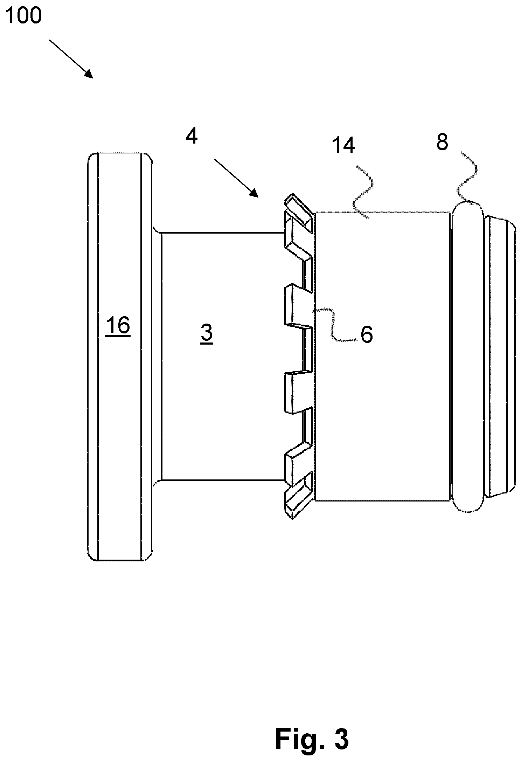

Fig. 3 shows a side view of the connecting element 100, particularly suitable for use in plumbing and hydronic piping systems, as described in the related claims. The segments 6 of the retaining flange 4 extend radially outward from the connector's central axis CA, functioning to engage the inner wall of the pipe section 10, providing a retaining force. The depicted segments are illustrated with angular, tooth-like projections that facilitate mechanical retention by digging into the softer material of the pipe 10 and resisting axial forces.

Beyond the retaining flange 4, the cylindrical male connector 3 transitions to a smoother external surface, which separates the sealing elastomer 8 from the retaining flange 4. The separation between the sealing element 8 and the retaining flange 4 is emphasized by the cylindrical ring-shaped area 14 between the two components. This structural detail supports the independent function of the sealing element 8 and the retaining flange 4, as described in the claims. The use of different materials for the retaining flange 4 and the sealing element 8 is possible, ensuring optimal mechanical retention and fluid sealing properties. The depicted structure provides flexibility in engaging with different pipe configurations 10 and can accommodate various dimensions, suited for different plumbing applications.

Fig. 4 shows a longitudinal-section of the connecting element 100 designed for use in a pipe section 10, demonstrating features integral to its operation. The connecting element 100 comprises a main cylindrical body 3 intended for insertion into a pipe section 10 made of shape memory polymer, facilitating a connection or closure.

The longitudinal-section reveals the design of the retaining flange 4, which can include trapezoidal, square or rectangular longitudinal sections 6 with a flat or sharp outer retaining edge 21, further complementing the gripping elements by interacting with the pipe wall. The depiction indicates a configuration where the sealing element 8 is shown protruding beyond the outermost circumference of the cylindrical male connector 3, suggesting potential for enhanced sealing pressure in practical applications. The illustration is suitable for observing the spatial separation between the flange 4 and the sealing element 8, supporting their independent functional roles as outlined in the claims and disclosure.

Fig. 5 shows a longitudinal-sectional of a Tee-fitting incorporating connecting elements 3 designed to facilitate the joining of pipe sections 10 made from shape memory polymers. A Tee-fitting in plumbing is a T-shaped pipe fitting that connects three pipe sections together, allowing fluid to flow or be diverted in different directions. It typically has one inlet and two outlets arranged at 90 degrees to each other, forming the shape of the letter "T"-hence the name. This fitting is used to either split a single flow into two paths or combine two flows into one.

The figure illustrates the arrangement of a T-shaped pipe conduit connection comprising the connecting element 102 within the conduit branches 10 (not shown, but pipe section 10 depicted in figure 6) to achieve both mechanical retention and fluid-tight seals. Each cylindrical male connector 3 includes multiple circumferential mechanical retaining flanges 4 spaced around the connector 3, comprising separate segments 6, which are depicted as extending radially outward from their central axes CA. These flanges 4 are intended to function independently from the sealing elements 8.

The sealing elements 8, represented in figure 5 as elastomeric rings, are positioned adjacent to the pipe interfaces 10 (cf. figure 6) and are designed to compress between the inner surfaces of the pipe sections 10 and the outer surfaces of the cylindrical male connectors 3. This configuration aims to produce a fluid-tight seal when the expanded pipe sections 10 contract to their original dimensions over the connectors 3, without relying on external PEX reinforcing rings.

Additionally, the segments 6 of the retaining flanges 4 demonstrate an inclination towards the pipe section 10 ends, facilitating improved retention forces. The innermost segments 6, illustrated in trapezoidal or similarly geometrically defined longitudinal sections, present flat outer retaining edges 21 for enhanced engagement with the pipe sections 10. These segments 6 are shaped to protrude beyond the outer circumferences of the cylindrical male connectors 3 and can include curved sections 12 to extend outward in a claw-like manner, contributing to their function in maintaining mechanical engagement within the pipe section 10.

The depiction also maintains a clarity on the spatial separation between the sealing elements 8 and retaining flanges 4 through a cylindrical ring-shaped area 14, further supporting their distinct operational roles.

In figure 6, circumferential depressions 18 are evident between the sealing element 8 and retaining flange 4, which potentially assist in their independent functioning within operational conditions.

The entire assembly demonstrates a consideration for material composition variances, where the retaining flanges 4 are typically formed from metals such as stainless steel, and the sealing elements 8 are shown as elastomers to provide resilience and sealing capabilities. This illustrates the invention's departure from traditional PEX ring incorporations, highlighting the improved mechanics and fluid dynamics within hydronic and plumbing systems.

### List of reference numerals

- 3: cylindrical male connector, in particular cylindrical section of a plastic fitting body, for example of an injection molded plastic fitting body, of the connecting element 100, 102
- 4: retaining flange of the cylindrical male connector 3, in particular metal retainer, for example stainless steel retainer being insert-molded into the fitting body
- 6: segment, in particular tooth, of the retaining flange 4
- 7: gap between segments 6
- 8: sealing element, for example O-ring, such as O-ring elastomer
- 10: section of a pipe or a tube made of shape memory polymer
- 12: curved section of the retaining flange 4
- 14: cylindrical ring-shaped area of the cylindrical male connector 3
- 16: stopper of the connecting element 100, the stopper 16 being designed to close the pipe end
- 18: circumferential depression or trough of the cylindrical male connector 3
- 21: outer retaining edge or distal edge of the segment 6 of the retaining flange 4100 connecting element, in particular connector, (first embodiment cf. figures 1 to 3)
- 102: connecting element, in particular connector, (second embodiment cf. figure 4)
- 300: pipe conduit connection
- CA: central axis of the cylindrical male connector 3 (cf. figures 1 and 4)
- 4L: longitudinal axis of the segments of the retaining flange 4 (cf. figure 4)

## Claims

1. Connecting element (100; 102) for closing a pipe section (10) made of shape memory polymer or for connecting the pipe section 10 with at least one connection element (200), for example with a further pipe section, wherein the connecting element (100;102) comprises at least one cylindrical male connector (3) for attachment to the pipe section (10),
- wherein the cylindrical male connector (3) is designed to be arranged in an operating condition at one end of the pipe section inside the pipe,
- wherein the cylindrical male connector (3) comprises at least one circumferential mechanical retaining flange (4) that extends radially outward from a central axis (CA) of the cylindrical male connector (3), protruding beyond the outermost circumference of the cylindrical male connector (3) to firmly secure the connecting element (100; 102) to the pipe section (10), and
- wherein the cylindrical male connector (3) further comprises at least one circumferential, resilient sealing element (8) that extends radially outwards from the central axis (CA) and is designed create a fluid-tight seal between the pipe section (10) and the cylindrical male connector (3), **characterized in that**
- the circumferential mechanical retaining flange (4) comprises at least two separate segments (6), in particular teeth, spaced apart by a gap (7), which segments (6) are arranged circumferentially around the cylindrical male connector (3) and extend radially outward from the central axis (CA) and
- the sealing element (8) and the retaining flange (4) are spatially separated from each other to function independently in the operating condition.

2. The connecting element of claim 1, **characterized by** three to thirty, for example five to twenty, such as eleven or twelve, separate segments (6) being arranged symmetrically or essentially symmetrical around the cylindrical male connector (3).

3. The connecting element of claim 1 or 2 **characterized in that** the separate segments (6) are trapezoidal, square or rectangular in longitudinal section, with a flat outer retaining edge which facilitates gripping and retaining the pipe section (10) by engaging or by digging into its inner surface.

4. The connecting element of at least one of claims 1 to 3, **characterized in that** the sealing element (8) protrudes beyond the outermost circumference of the cylindrical male connector (3) to enhance a sealing pressure at the pipe connection in the operating condition.

5. The connecting element according to at least one of claims 1 to 4, **characterized in that** the longitudinal axis (4L) of the segments (6) of the retaining flange (4) is inclined towards the pipe section end to increase the retaining force at the pipe connection in the operating condition, in particular that the longitudinal axis (4L) of the retaining flange (4) is arranged at an angle of less than 45 degrees, in particular at an angle of between 10 degrees and 44.5 degrees, for example at an angle of between 30 degrees and 43 degrees, to the central axis (CA) of the cylindrical male connector (3).

6. The connecting element according to at least one of claims 1 to 5, **characterized in that** the segments (6) of the retaining flange (4) comprise in cross section at least one curved section (12) to extend radially outwards in a claw-like manner to facilitate gripping and retaining the pipe section (10).

7. The connecting element according to at least one of claims 1 to 6, **characterized in that** the retaining flange (4) is connected to the cylindrical male connector (3) by means of insert-molding .

8. The connecting element according to at least one of claims 1 to 7, **characterized in that** a circumferential depression or trough (18) is provided on the cylindrical male connector (3) between the sealing element (8) and the retaining flange (4) to support the independent function of the sealing element (8) and the retaining flange (4) in the operating condition.

9. The connecting element according to at least one of claims 1 to 8, **characterized in that** the cylindrical male connector (3) and the sealing element (8) comprise different material compositions, wherein
- the retaining flange (4) essentially comprises metal and/or other strong, non-resilient material, for example stainless steel an/or copper and/or silver and/or nickel and/or gold and/or tin and/or Inconel and/or a Polytetrafluoroethylene coating, and
- the sealing element (8) essentially comprises at least one elastomer, for example Nitrile (NBR) and/or Fluoroelastomer (FKM) and/or Silicone (VMQ) and/or Ethylene Propylene Diene Monomer (EPDM).

10. The connecting element according to at least one of claims 1 to 9, **characterized in that** the cylindrical male connector (3) comprises at least one cylindrical ring-shaped area (14), in particular a fitting body, having a smooth or non-textured outer surface, wherein the retaining flange (4) extends radially outward from the cylindrical ring-shaped area (14) in such way, that it protrudes beyond the outer circumference of the cylindrical male connector (3).

11. The connecting element according to at least one of claims 1 to 10, **characterized in that** the sealing element (8) and the retaining flange (3) are spatially separated from each other by means of the cylindrical ring-shaped area (14).

12. Pipe conduit connection (300) **characterized by** a connecting element (100; 102) according to at least one of claims 1 to 11 and at least one section of a pipe or tube made of shape memory polymer, said pipe section being configured to receive the connecting element (100; 102) by being elastically expandable at room temperature and capable of returning to a predetermined original shape after being deformed, the outer diameter of the cylindrical male connector (3) being substantially the same as the inner diameter of the pipe section in the original shape, the cylindrical male connector (3) being arranged at one end of the pipe section inside the pipe, wherein the retaining flange (4) of the cylindrical male connector (3) engages with, in particular digs into, the inner wall of the pipe section (10) to firmly secure the cylindrical male connector (3).

13. The pipe conduit connection according claim 12, **characterized by** the absence of a clamping ring arranged around the pipe section to press the pipe section against the connecting element (100; 102).

14. A method for connecting a pipe section (10) made of shape memory polymer to a connecting element (100; 102) according to at least one of claims 1 to 11, wherein
(i) the pipe section is expanded,
(ii) the cylindrical male connector (3) is arranged at one end of the pipe section (10) inside the pipe, and
(iii) the pipe section returns to a predetermined original shape, wherein the segments (6) of the circumferential mechanical retaining flange (4) engages with, in particular digs into, the inner wall of the pipe section (10) to firmly secure the cylindrical male connector (3).

15. Use of the connecting element according to at least one of claims 1 to 11 and/or of the pipe conduit connection (300) according to claim 12 or 13 for providing at least one cold expansion plumbing and hydronic fitting connection in a hydronic heating and cooling system.
